# EUROPÄISCHE PATENTSCHRIFT

(11) **EP 3 673 565 B1**
(45) Veröffentlichungstag und Bekanntmachung des Hinweises auf die Patenterteilung: **14.07.2021**
(21) Anmeldenummer: 18759845.3
(22) Anmeldetag: 07.08.2018
(51) Int. Cl.: H02K 5/12, F04D 13/08, H02K 5/02, H02K 5/22, H02K 7/116, H02K 11/215, H02K 5/128

(54) **DRUCKNEUTRALER ELEKTROMOTOR ZUM EINSATZ IN DER TIEFSEE**
PRESSURE INDEPENDENT ELECTRIC MOTOR TO BE APPLIED IN DEEP SEA
MOTEUR ÉLECTRIQUE INDÉPENDANT DE LA PRESSION POUR L'UTILISATION DANS LES ABYSSES

(30) Priorität: 22.08.2017 DE 102017119158
(43) Veröffentlichungstag der Anmeldung: 01.07.2020
(73) Patentinhaber: Alfred-Wegener-Institut Helmholtz-Zentrum für Polar- und Meeresforschung, 27570 Bremerhaven (DE)
(72) Erfinder: LEMBURG, Johannes, 27568 Bremerhaven (DE)
(86) Internationale Anmeldenummer: PCT/DE2018/100689
(87) Internationale Veröffentlichungsnummer: WO 2019/037813

(56) Entgegenhaltungen:
- WO-A2-2007/100788
- US-A- 2 002 916
- US-A- 2 857 181
- US-A- 3 526 097
- US-B1- 6 795 110
- US-B2- 8 523 540

## Beschreibung

Die Erfindung bezieht sich auf einen druckneutralen Elektromotor zum Einsatz in der Tiefsee mit einem Gehäuse, in dem eine mit einer dielektrischen Druckflüssigkeit gefüllte Motoreinheit, wobei das Befüllen unter Atmosphärendruck alternierend mit einer Entlüftung im Vakuum erfolgt, um eine luftblasenfreie Füllung am Ende des Befüllens zu garantieren, und ein reversibel verformbares Druckausgleichselement zum Druckausgleich zwischen der Druckflüssigkeit und dem im Einsatzfall auf die Motoreinheit einwirkenden hydrostatischen Druck angeordnet sind.

Zur Erforschung der benthischen und pelagialen Gebiete der Tiefsee (90% aller Meere haben eine Tiefe zwischen 1000 m und 5000 m) werden ferngesteuerte oder autonome Messgeräte und Fahrzeuge eingesetzt. Mit deren Hilfe können Daten aller Art über den Boden, die Bewohner und das Wasser der Tiefsee gewonnen werden. Zum Antrieb der agierenden Komponenten werden zumeist Elektromotoren verwendet, die jedoch dem großen hydrostatischen Druck in der Tiefsee standhalten müssen. Zur entsprechenden Ertüchtigung der Elektromotoren werden zwei grundsätzlich verschiedene Konzepte verfolgt. Zum einen werden druckstabile Behälter für die Elektromotoren eingesetzt, die eine große Druckdifferenz zwischen Innenraum und Außenraum zulassen. Zum anderen werden druckneutrale Systeme (DNS, auch drucktolerante Systeme, engl. pressure tolerant systems) eingesetzt, bei denen alle Komponenten gleichmäßig und damit stabilisierend von allen Seiten dem hohen Druck ausgesetzt werden. Druckdifferenzen treten somit nicht auf. Grundvoraussetzung für ein DNS ist, dass die Komponenten auch unter hohen Drücken funktionsfähig sind. Neben Feststoffen werden Druckfluide eingesetzt, die alle ggfs. vorhandenen Lufträume (Drucckammern) in der Komponente ausfüllen. DNS benötigen keine stabilen Druckbehälter und können in allen Tiefen eingesetzt werden. Ebenso entfallen die zu berücksichtigenden vergrößerten Bauraumabmessungen sowie druckdichten Durchführungen und Zugänge in das Innere der Druckbehälter mit komplexen Öffnungs- und Schließprozeduren. Es ergibt sich eine erhebliche Gewichtsreduktion und damit Kosteneinsparung. Zu unterscheiden sind feststoffbasierte DNS (vollständiger Einguss in einen seewasserresistenten Kunststoff) und flüssigkeitsbasierte DNS (vollständiges Ausfüllen aller Druckkammern mit einer Druckflüssigkeit). Bei den flüssigkeitsbasierten DNS muss - da auch die Druckflüssigkeiten bei extrem hohen Drücken kompressibel sind - zur Druckanpassung zwischen dem Innenraum der Komponente und der Tiefseeumgebung ein in seinen Abmessungen veränderbares Druckausgleichselement vorgesehen sein, sodass auf die Komponenten keine enorme Druckdifferenz einwirkt. Bei dem Druckausgleichselement kann es sich um einen verschieblichen Kolben, einen Faltenbalg, eine dehnfähige Membran oder ein verformbares Kissen handeln.

### Stand der Technik

Aus der US 3 717 078 A ist für Unterwasseranwendungen das Grundprinzip für ein bezüglich des Drucks ausbalanciertes System zum Schutz von Komponenten, die nicht salzwasserfest sind, bekannt. In einem einfachen, nicht druckfesten Gehäuse befinden sich eine Batterie und ein Motor als nichtsalzwasserfeste Komponente (zur Versorgung einer salzwasserfesten Kamera außerhalb des Gehäuses) in einem Ölbad. Die Komponenten selbst sind druckfest, aber nicht mit Öl gefüllt. Im Gehäuse befindet sich eine Membran, die für einen Druckausgleich zwischen dem Öl und der umgebenden hydrostatischen Wassersäule sorgt. Aus der DE 10 2009 032 364 B4 ist eine Vorrichtung für den Unterwasserbetrieb bekannt, bei der die Druckkammern in ihrem Volumen minimiert und die Einbauten druckneutral ausgebildet sind. Der zugehörigen Doktorarbeit "Aufbau druckneutraler, autonomer Unterwasserfahrzeuge in der Tiefsee" (M. Lück, TU Berlin 2010, im Internet abgerufen am 15.08.2017 unter der **URL 1**) ist zu entnehmen, dass druckneutrale Ringmotoren (Seite 115 unten) eingesetzt werden. Ein solcher Ringmotor ist beispielsweise aus dem Prospektblatt "Ringthruster" der Fa. Enitech vom Januar 2014 bekannt (im Internet abgerufen am 15.08.2017 unter der **URL 2**). In der Einleitung der Doktorarbeit (Seite 37, 38) ist weiterhin zu lesen, dass fluidkompensierte DNS einen Kompensator, eine einzelne deformierbare Wand oder einen formlosen Beutel, in dessen Inneren die Komponenten angeordnet sind, als Druckausgleichselement aufweisen können. Formlose Beutel haben den Vorteil, dass sie eine maximale Deformation zulassen und teure Kompensatoren ersetzen. Ein sehr kompakter druckneutraler Elektromotor ist in der Beschreibung "maxon Aquatic Solutions" (im Internet abgerufen am 15.08.2017 unter der **URL 3)** offenbart. In einem zylindrischen Gehäuse sind parallel nebeneinander eine Motoreinheit und ein Druckausgleichselement in Form einer Membran angeordnet. Ein druckneutraler Elektromotor in vollvergossener Form ist schließlich von der Fa. FMT Floren MarineTechnik GmbH (im Internet abgerufen am 15.08.2017 unter der **URL 4**) bekannt.

Der der Erfindung nächstliegende Stand der Technik wird in der US 8 328 539 B2 offenbart. Beschrieben wird ein druckneutraler Elektromotor zum Antrieb einer Pumpe in den Tiefen eines flüssigkeitsgefüllten Bohrlochs. Eine zylindrische Motoreinheit ist in einem zylindrischen Gehäuse angeordnet und von einem dielektrischen Motoröl gasblasenfrei ausgefüllt und umgeben. Unterhalb der Motoreinheit befindet sich in axialer Verlängerung im zylindrischen Gehäuse ein reversibel verformbares Druckausgleichselement zum Druckausgleich zwischen der Druckflüssigkeit und dem auf die Motoreinheit einwirkenden hydrostatischen Druck. Bei dem bekannten druckneutralen Elektromotor handelt es sich um einen Faltenbalg oder um eine Membran. Die im Bohrloch anstehende Flüssigkeit kann über Löeher im zylindrischen Gehäuse in das Innere eindringen und den Faltenbalg oder die Membran auf der einen Seite druckbeaufschlagen. Auf der anderen Seite des Faltenbalgs oder der Membran steht das Motoröl an, über das der wirkende hydrostatische Druck dann auf die Motoreinheit übertragen wird.

Aus der DE 10 2010 044 639 A1 ist es für einen fluidgekühlten Elektromotor bekannt, diesen mit einem Öl zu füllen und mit einer ölgefüllten Kühlmanschette zu umgeben. Der Motor ist für Unterwasserbetrieb vorgesehen und kann aufgrund der Druckfestigkeit der Komponenten in Tiefen von über 1000 m eingesetzt werden. Mittel für eine Druckneutralisation sind aber nicht vorgesehen. Insbesondere weist die Kühlmanschette keine Verbindung mit dem hydrostatischen Druck auf.

Die US 5 796 197 A zeigt eine Flüssigkeitspumpe für Unterwasseranwendungen, bei der als Druckausgleichselement ein geschlossener Druckbeutel verwendet wird. Der Druckbeutel weist einen offenen Zuleitungsschlauch auf, der druckdicht aus dem Gehäuse herausgeführt ist, Dabei ist der Druckbeutel aber in einer von der Motoreinheit separierten Kammer unterhalb der Motoreinheit angeordnet. Die WO 2011 / 156 424 A1 zeigt ebenfalls eine Flüssigkeitspumpe für Unterwasseranwendungen, bei der um die Motoreinheit ein Schutzbeutel herumgelegt ist. Dieser soll aber die Motoreinheit vor korrosiven Flüssigkeiten schützen und dient nicht dem Druckausgleich.

Aus der US 3 526 097 A ist ein kurz unter der Wasseroberfläche einzusetzendes System mit einer ölgefüllten Statorkammer und einer gasgefüllten Rotorkammer bekannt. Am Stator werden konstant Blasen erzeugt, die über eine Blasenfalle, eine Abgasleitung und eine Wasserleitung kontinuierlich in die atmosphärische Umgebung abgelassen werden. Die Statorkammer kommuniziert also mit der atmosphärischen Umgebung, sodass es sich um ein offenes System handelt, bei dem flüssigkeits- und gasgefüllte Räume miteinander verbunden sind. Weiterhin befindet sich raumnehmend ein Faltenbalg unterhalb der Motoreinheit, der auf seiner Außenseite von dem Gas und auf seiner Innenseite von der Druckflüssigkeit beaufschlagt ist. Dessen Funktion besteht im Druckausgleich zwischen der ölgefüllten Statorkammer und einer gas- und wassergefüllten Pufferkammer, sodass unmittelbar ein Druckausgleich erfolgt. Um ein Vermischen von Gas und Wasser in der Pufferkammer bei gleichzeitiger Druckübertragung zu verhindern, ist auf den Wasserspiegel ein Pufferfluid (mit "Kolbenfunktion") aufgebracht. Um das Wasser unter Umgebungsdruck zu setzen, ist es über Rohrleitungen mit dem Umgebungswasser verbunden.

Aus der US 8 523 540 B2 ist ein ähnliches System zur Förderung ein Prozessfluids bekannt. Wiederum befindet sich der Stator des Elektromotors in einer ersten hermetisch abgeschlossenen Kammer, in der ein erstes Fluid umgewälzt wird (geschlossener Kreislauf). Der Rotor befindet sich in einer zweiten abgeschlossenen Kammer, in der ein zweites Fluid umgewälzt wird (offenes System). Beide Kreisläufe sind voneinander getrennt. Das erste Fluid dient der Statorkühlung. Das zweite Fluid dient der Rotorkühlung und wird über Einlässe mit einem 15 bis 20 bar oberhalb des Umgebungsdruckes liegenden Druck zugeführt. Ein unmittelbarer Druckausgleich zwischen dem ersten und dem zweiten Fluid findet in einer Druckausgleichskammer mit einer Trennmembran zwischen beiden Fluiden statt.

Aus der US 2 002 916 A ist ein tauchfähiger Motor bekannt, der von einer internen Flüssigkeit umspült wird (geschlossener Kreislauf). Eine Druckübertragungskammer mit einer oberen und einer unteren Sektion ist raumnehmend oberhalb des Motors angeordnet und wird ebenfalls von der Flüssigkeit durchspült. In der oberen Sektion der Druckübertragungskammer befindet sich ein Faltenbalg, der in seinem Inneren von Umgebungswasser ausgefüllt ist und dessen Druck auf die Flüssigkeit überträgt. Der Faltenbalg steht unter einer Vorspannung. Er erzeugt dadurch einen Überdruck, der eine Leckage an einer Wellendurchführung nur nach außen in die atmosphärische Umgebung erzwingen soll.

Aus der US 2 857 181 A ist eine ähnliche Anordnung mit einem flüssigkeitsumspülten Motor und einem dazu in Reihe geschalteten, vorgespannten Faltenbalg bekannt, wobei über den Faltenbalg der Innendruck des Motorgehäuses (mit Stator und Rotor) kontrolliert werden soll. Über Zu- und Ablaufleitungen steht das Öl im Inneren des Motorgehäuses mit der atmosphärischen Umgebung in Verbindung, sodass es sich wiederum um ein offenes System handelt, das nicht für den Einsatz in der Tiefsee geeignet ist.

Ausgehend von dem zuvor erläuterten nächstliegenden Stand der Technik ist die Aufgabe für die vorliegende Erfindung darin zu sehen, den eingangs beschriebene gattungsgemäßen druckneutralen Elektromotor zum Unterwassereinsatz in der Tiefsee so weiterzubilden, dass eine besonders einfache Ausgestaltung hinsichtlich Konstruktion und Handhabung unter möglichst weitgehendem Einsatz von handelsüblichen Komponenten erreicht wird. Dabei sollen alle Vorteile eines druckneutralen Systems erhalten bleiben. Die Lösung für diese Aufgabe ist dem unabhängigen Anspruch 1 zu entnehmen. Vorteilhafte Weiterbildungen der Erfindung werden in den Unteransprüchen aufgezeigt und im Folgenden im Zusammenhang mit der Erfindung näher erläutert.

Erfindungsgemäß ist bei dem beanspruchten druckneutralen Elektromotor vorgesehen, dass das reversibel verformbare Druckausgleichselement als geschlossener Druckbeutel mit einem offenen, aus dem Gehäuse druckdicht herausgeführten Zuleitungsschlauch ausgebildet und mit einigem Abstand, sodass die Druckflüssigkeit auch gut zwischen den Druckbeutel und die zylindrische Motoreinheit dringen kann und der Druckbeutel auf seiner Außenseite vollständig von Druckflüssigkeit umgeben ist, um die Motoreinheit innerhalb des Gehäuses herumgelegt ist, wobei der Druckbeutel beim Befüllen mit Luft gefüllt und auf seinen normalen Volumenzustand aufgebläht ist, dass das Gehäuse durchsichtig ausgebildet und dass als Druckflüssigkeit ein kommerziell erhältlicher Hydrofluorether eingesetzt ist. Durch diese Anordnung ergibt sich eine besonders kompakte und kostengünstige Bauweise. Durch die Anordnung des Druckbeutels im Inneren des Gehäuses wird eine Gewichtsreduzierung in Höhe des doppelten Beutelvolumens multipliziert mit der Dichte der Druckflüssigkeit erreicht. Insgesamt wird eine deutliche Verbesserung der Einsatzfähigkeit und Handhabbarkeit beim beanspruchten Elektromotor für den komplexen Unterwassereinsatz erreicht. Dabei wird es in der Praxis bevorzugt sein, dass jedes in der Tiefsee eingesetzte und anzutreibende Gerät seinen eigenen Elektromotor erhält, sodass dieser relativ klein dimensioniert sein kann. Zentralantriebe werden vermieden, beim Ausfall eines Elektroantriebs können durch die anderen dezentralen Elektroantriebe die anderen Geräte noch weiterbetrieben werden. Ein besonderer Vorteil bei dem mit der Erfindung beanspruchten druckneutralen Elektromotor besteht darin, dass keine druckstabilen Gehäuse, die groß, schwer, aufwändig in ihrer Handhabung und teuer sind, eingesetzt werden. Vielmehr zeigt der beanspruchte Elektromotor ein besonders geringes Gewicht und besonders handliche Abmaße.

Bei der Erfindung wird ein reversibel verformbarer druckdichter Druckbeutel eingesetzt, der im Einsatzfall unter Wasser auf seiner Außenseite von der Druckflüssigkeit umgeben und in seinem Inneren vom Wasser ausgefüllt ist, das den der Tauchtiefe entsprechenden hydrostatischen Druck ausübt. Dieser wird dann über den Druckbeutel auf die Druckflüssigkeit übertragen. Es kommt zu einem Druckausgleich, auf alle Komponenten wird gleichmäßig der gleiche große hydrostatische Druck ausgeübt. Befindet sich der Elektromotor in luftiger Umgebung, ist der Druckbeutel mit Luft gefüllt. Der Druckbeutel kann zwischen der Motoreinheit und dem Gehäuse "atmen". Bei ansteigendem Druck wird der Druckbeutel in seinem Volumen durch den in seinem Inneren zunehmenden Wasserdruck größer und drückt die Druckflüssigkeit zunehmend zusammen. Bei geringer werdendem Druck wird der Druckbeutel in seinem Volumen durch den in seinem Inneren abnehmenden Wasserdruck wieder kleiner und lässt eine Expansion der Druckflüssigkeit zu. Beim Befüllen mit Druckflüssigkeit kann über die eingefüllte Menge eingestellt werden, ob der Druckbeutel zu Beginn des Absenkens des Elektromotors in die vorgesehene Tauchtiefe eher voll oder leer ist. Die optimale Füllmenge hängt vom Einsatzprofil des Elektromotors ab. In großen Tauchtiefen wird die Druckflüssigkeit stark zusammengedrückt (es kann mehr Druckflüssigkeit eingefüllt werden), bei starker Wärmeeinwirkung (beispielsweise bei einer Lagerung der Batterie auf einem sonnenbeschienenen Schiffsdeck) dehnt sich die Druckflüssigkeit aus (es kann weniger Druckflüssigkeit eingefüllt werden). In diesem Falle ist der Beutel dann aber auch in seinem Inneren mit Luft gefüllt und kann weitgehend komprimiert werden. Wasser und Luft dringen über den offenen Zuleitungsschlauch in das Innere des Druckbeutels, wobei der Zuleitungsschlauch ebenfalls von Druckflüssigkeit umgeben und druckdicht aus dem Gehäuse herausgeführt ist. Bei dem beanspruchten druckneutralen Elektromotor wird durch die Verwendung eines geschlossenen Druckbeutels die in der Regel zylindrische Motoreinheit einfach und platzsparend umwickelt. Im Einsatzfall ist der Druckbeutel mit kaltem Tiefseewasser gefüllt, wodurch als zusätzlicher Vorteil die Motoreinheit auch noch besonders einfach gekühlt und damit vor einer Überhitzung geschützt werden kann.

Die bei der Erfindung eingesetzte Druckflüssigkeit darf die Funktionsfähigkeit des Motors nicht beeinflussen. Bei einer Verwendung von Weißöl (Vaseline) wird dieses unvorteilhafterweise im Bürstenfeuer verbrannt. Bei einem Einsatz von Silikonöl rutschen die Bürsten aufgrund der starken Schmierung durch. Erfindungsgemäß wird deshalb als Druckflüssigkeit ein kommerziell erhältlicher Hydrofluorether eingesetzt. Hierbei handelt es sich um ein inertes Fluid, das die oben erwähnten Nachteile nicht aufweist.

Um die Motoreinheit und den Druckbeutel einfach in das Gehäuse, das besonders bevorzugt und vorteilhaft zylindrisch ausgeführt ist, einbringen zu können, ist dieses bevorzugt an beiden Enden offen. Es handelt sich damit um ein einfaches Rohr, das als Gehäuse eingesetzt werden kann. Bei Verwendung eines Rohrs als Gehäuse ist es bevorzugt und vorteilhaft, wenn das Gehäuse an seinem einen Ende mit einem ersten Deckel und an seinem anderen Ende mit einem zweiten Deckel druckdicht verschlossen ist. Die Deckel können aus einem Kunststoff, beispielsweise aus Polyoxymethylen POM, bestehen und mit Dichtungsringen in das Gehäuse eingedichtet werden. Jeweils zwei bis vier Schrauben sorgen für einen sicheren Sitz. Bei Verwendung von zwei Deckeln ist es weiterhin bevorzugt und vorteilhaft, wenn durch den ersten Deckel eine mit der Motoreinheit in Verbindung stehende Ausgangswelle und durch den zweiten Deckel der Zuleitungsschlauch des Druckbeutels und ein elektrischer Anschluss für die Motoreinheit druckdicht herausgeführt sind. Die Ausgangswelle kann beispielsweise aus Titan bestehen und an eine Edelstahlwelle der Motoreinheit angedockt werden. Der Zuleitungsschlauch des Druckbeutels wird mit einem Dichtungsrohr druckdicht in den zweiten Deckel eingepasst. Durch das Dichtungsrohr bleibt dabei die Verbindung in das Innere des Druckbeutels für den Druckausgleich mit der Umgebung offen. Desweiteren ist es bei der Erfindung bevorzugt und vorteilhaft, wenn im zweiten Deckel eine druckdicht verschließbare Durchgangsbohrung vorgesehen ist, die der Befüllung mit Druckflüssigkeit und Entlüftung der Motoreinheit dient. Der druckdichte Verschluss im zweiten Deckel kann beispielsweise durch einen Verschlussstopfen mit Elastomerdichtung umgesetzt werden. Vorteilhafterweise erfolgt das Befüllen des Elektromotors ein- oder mehrfach alternierend mit einer Entlüftung im Vakuum (beispielsweise in einer Vakuumkammer), um eine luftblasenfreie Füllung sicher garantieren zu können. Das Befüllen erfolgt unter Atmosphärendruck beispielsweise mit einer einfachen Spritze (ggfs. mit Nadelaufsatz). Beim Befüllen ist der Druckbeutel mit Luft auf seinen normalen Volumenzustand aufgebläht und druckdicht verschlossen. Sobald Drückflüssigkeit aus der Durchgangsbohrung austritt, wird der Füllvorgang abgebrochen.

Bei dem erfindungsgemäßen druckneutralen Elektromotor ist das Gehäuse kein Druckgehäuse und muss keinen großen Druckdifferenzen standhalten. Insbesondere kann das Gehäuse somit auch aus einem dünnen, leichten und kostengünstigen Kunststoff, insbesondere auch aus einem einfachen Kunststoffrohr, sein. Erfindungsgemäß besteht das Gehäuse aus einem transparenten Material und ist durchsichtig ausgebildet. Damit kann das Innere wie durch ein Schaufenster beispielsweise beim Befüllen mit Druckflüssigkeit gut beobachtete werden. Aufsteigende Gasblasen werden sofort bemerkt und der Füllvorgang noch weiter durchgeführt. Weiterhin ergibt sich eine einfache Montage und Handhabbarkeit des beanspruchten druckneutralen Elektromotors. Insbesondere eignet sich bevorzugt und vorteilhaft der Einsatz von transparentem Polymethylmethacrylat PMMA oder Polycarbonat PC für das transparente Gehäuse. Beide Kunststoffe sind hochtransparent und dauerhaft resistent gegen Salzwasser, wobei PC noch schlagfester ist als PMMA ist.

Weiterhin kann bei der Erfindung bevorzugt und vorteilhaft als Druckbeutel ein kommerziell erhältlicher Schlauchbeutel mit einem integrierten offenen Zuleitungsschlauch eingesetzt werden, wobei in das Ende des offenen Zuleitungsschlauchs ein Dichtungsrohr eingesetzt ist. Druckdicht festgehalten wird das Dichtungsrohr im Zuleitungsschlauch durch ein Takling (feste Schnurumwicklung) auf dem Zuleitungsschlauch und einen O-Ring. Dabei ist das Dichtungsrohr in seiner Mitte offen, sodass immer eine Verbindung zwischen dem Beutelinneren und der jeweiligen Umgebung hergestellt ist. Der Beutel ist also immer mit dem entsprechenden Medium (Wasser oder Luft) in gefüllt. Derartige medizinische Schlauchbeutel werden im medizinischen Sektor eingesetzt und sind als Infusions-, Urin- oder Sekretbeutel bekannt und in unterschiedlichen Volumengrößen und in der Regel aus Polyvinylchlorid bestehend am Markt erhältlich. Sie weisen immer einen Zuleitungsschlauch auf, der an seinem freien Ende verschließbar ist. Die medizinischen Beutel bestehen aus einem festen, reversibel verformbaren Kunststoff und lassen sich einfach auf das gewünschte Volumen zuschneiden und wieder verschweißen. Eine Verwendung von aluminiumbedampften Mehrschichtbeuteln, wie sie als Getränkebeutel bekannt sind, können ebenfalls eingesetzt werden.

Schließlich ist es noch vorteilhaft und bevorzugt, wenn die Motoreinheit ein Getriebe und einen Impulsgeber umfasst. Derartige Motoreinheiten sind kommerziell erhältlich und können als "Elevatormotor" bezeichnet werden. Weiter oben wurde bereits erwähnt, dass herkömmliche Druckflüssigkeiten Probleme verursachen können. Vorteilhaft wäre es daher, bürstenlose Elektromotoren einsetzen zu können. Diese verfügen aber über eine Elektronik, die zusätzlich Strom verbraucht. Elektromotoren mit Bürsten benötigen keine Steuerelektronik, benötigen aber eine spezielle Druckflüssigkeit. Optimal ist ein Elektromotor, der in Wasser läuft und ein nichtrostendes Getriebe, also insbesondere aus Kunststoff, aufweist. Weitere Details zur Erfindung und ihren Ausführungsformen sind den nachfolgend beschriebenen Ausführungsbeispielen zu entnehmen.

### Ausführungsbeispiele

Nachfolgend werden der druckneutrale Elektromotor zum Einsatz in der Tiefsee nach der Erfindung und seine vorteilhaften Modifikationen anhand der schematischen Figuren zum besseren Verständnis der Erfindung noch weitergehend erläutert. Dabei zeigt die
- **Fig. 1**: den druckneutralen Elektromotor in der perspektivischen Ansicht und
- **Fig. 2**: den druckneutralen Elektromotor in der Explosionsdarstellung.

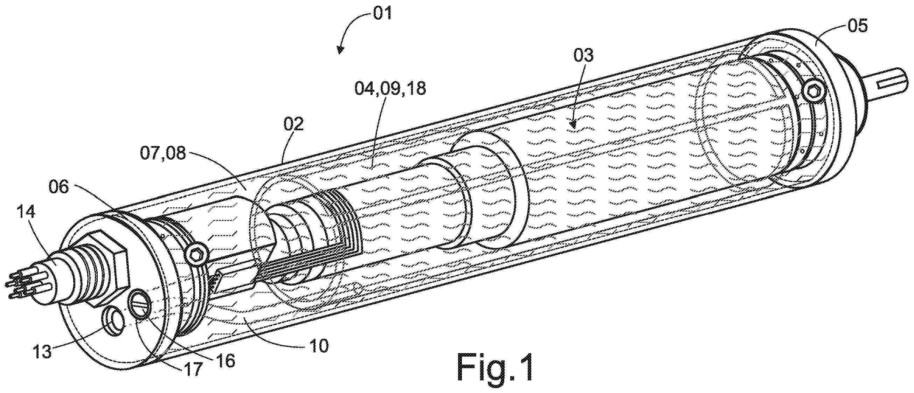

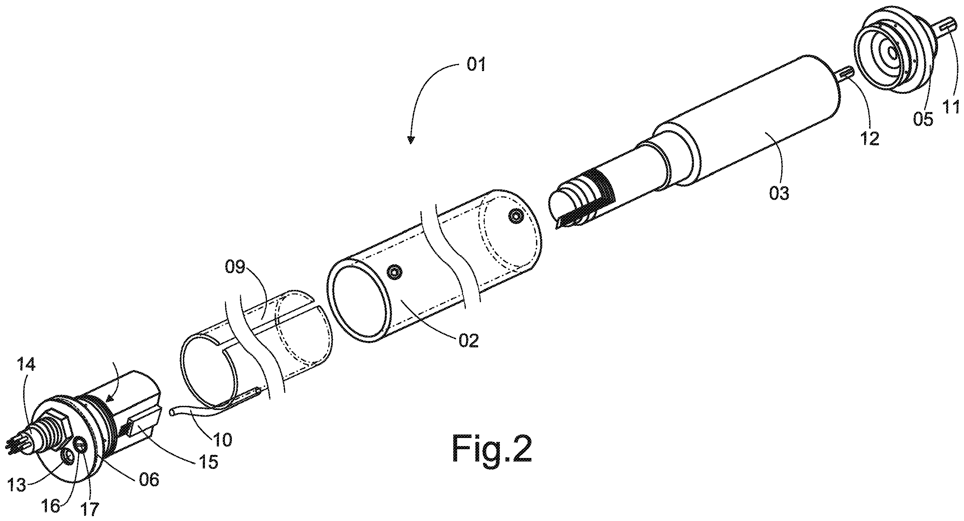

In der **Fig.** 1 ist eine perspektivische Draufsicht auf einen druckneutralen Elektromotor **01** nach der Erfindung (auch "Elevatormotor") gezeigt, der bis zu hadalen Tauchtiefen eingesetzt werden kann. In einer Darstellung nicht ausreichend deutlich zu erkennende Bezugszeichen sind der **Fig.** 2 zu entnehmen. Zu erkennen ist ein zylindrisches Gehäuse **02,** in dem eine Motoreinheit **03** und ein reversibel verformbares Druckausgleichselement **04** zum Druckausgleich zwischen einer Druckflüssigkeit **07** und dem auf die Motoreinheit **03** einwirkenden hydrostatischen Druck angeordnet sind. Im gezeigten Ausführungsbeispiel ist das zylindrische Gehäuse **02** aus einem transparenten Kunststoff, beispielsweise PMMA oder PC, ausgeführt. Die Motoreinheit **03** umfasst einen Gleichstrommotor mit Kohlebürsten, ein fünfstufiges Planetengetriebe und einen magnetischen Impulsgeber (beispielsweise von Fa. Faulhaber GmbH™, Prospektblatt "DC-Kleinstmotoren", im Internet abgerufen am 15.08.2017 unter der **URL 5,** Maße: Ø40 mm x 252 mm Gesamtlänge, Titan Ausgangswelle Ø8 mm x 16 mm mit Abflachung, Ø20 mm x 10 mm Zentrierzapfen, Bezeichnung 2342S012C R IE2-16 261 415:1, 12V DC Motor 2342 mit fünfstufigem Planetengetriebe 26/1 mit Übersetzung 415:1 und magnetischem Impulsgeber IE2 mit zwei Kanälen und 16 Impulsen pro Umdrehung). Das Trockengewicht des Elektromotors **01** beträgt 452 g, mit Flüssigkeitsfüllung an Land 573 g und in Meerwasser 342 g. Das zylindrische Gehäuse **02** ist an seinem einen Ende mit einem ersten Deckel **05** und an seinem anderen Ende mit einem zweiten Deckel **06** (beide bevorzugt aus Kunststoff) druckdicht verschlossen. Weitere Details siehe **Fig.** 2.

Das zylindrische Gehäuse **02** und die Motoreinheit **03** sind im gezeigten Ausführungsbeispiel mit 75 ml (eine größere Füllung reduziert die Möglichkeit der Temperaturkompensation) einer dielektrischen Druckflüssigkeit **07** gasblasenfrei gefüllt. Im gewählten Ausführungsbeispiel handelt es sich bei der Druckflüssigkeit **07** um einen kommerziell erhältlichen inerten Hydrofluorether **08** (beispielsweise Prospektblatt "3M™ Novec™7500 Engineered Fluid" (High-Tech-Flüssigkeit) im Internet abgerufen am 15.08.2017 unter der **URL 6**). In die Druckflüssigkeit **07** ist auch das Druckausgleichselement **04** eingelegt, das locker um die Motoreinheit **03** innerhalb des zylindrischen Gehäuses **02** herumgelegt ist. Bei dem Druckausgleichselement **04** handelt es sich um einen geschlossenen Druckbeutel **09** mit einem an seinem vom Druckbeutel **09** abgewandten Ende offenen Zuleitungsschlauch **10,** der aus dem zylindrischen Gehäuse **02** bzw. aus dem zweiten Deckel **06** druckdicht herausgeführt ist. Bei dem Druckbeutel **09** handelt es sich im gezeigten Ausführungsbeispiel um einen handelsüblichen medizinischen Beutel **18** aus Polyvinylchlorid (PVC), der durch Abschneiden und erneutes druckdichtes Verschweißen einfach in seinem Volumen an das Volumen des zylindrischen Gehäuses **02** und der Motoreinheit **03** angepasst werden kann. Der interne Druckbeutel **09** kann sich etwa 25 ml bis 30 ml (wenn er ganz prall wird) ausdehnen. Damit der mit der Erfindung beanspruchte Elektromotor **01** Druck- und Temperaturschwankungen kompensieren kann, muss vor dem Einsatz in der Tiefsee der Füllstand der Druckflüssigkeit **07** kontrolliert werden. 600 bar Überdruck und eine Temperaturabnahme von 25°C auf 0°C führen zu etwa 8% Volumenschwund, bei einem angenommenen Sollvolumen von 75 ml müssen also etwa 6 ml kompensiert werden.

In der **Fig.** 2 ist der beanspruchte druckneutrale Elektromotor **01** in der Explosionsdarstellung aufgezeigt (Gehäuse **02** verkürzt dargestellt). Gut zu erkennen ist der erste Deckel **05** mit einer Ausgangswelle **11** (beispielsweise aus Titan), die mit einer Antriebswelle **12** (beispielsweise aus Edelstahl) der Motoreinheit **03** verbunden ist. Die Ausgangswelle **11** dreht bei gefülltem Elektromotor **01** ohne Last bei 12 V und ca. 0,6 A mit 15 U/min. Durch den zweiten Deckel **06** ist der Zuleitungsschlauch **10** des Druckbeutels **09** (verkürzt dargestellt) druckdicht herausgeführt. Dazu ist in sein offenes Ende ein Dichtungsrohr **13** (vergleiche auch **Fig.** 1) eingesetzt und mit einem Takling (Schnurumwicklung auf der Außenseite des Zuleitungsschlauchs **10**) gesichert. Die Druckdichtheit wird mittels eines O-Rings garantiert. Desweiteren ist ein elektrischer Anschluss **14** (Fa. Subconn® Stecker MCBH6MTI (Titan) mit Pinbelegung für MPI-Bus modular) druckdicht aus dem zweiten Deckel **06** herausgeführt. Auf der Motorseite ist der elektrische Anschluss **14** mit einem Stecker **15** der Motoreinheit **03** elektrisch verbunden. Am ersten Deckel **05** besteht die Dichtung der Antriebswelle **12** aus einem O-Ring, der zwischen den Absätzen von zwei Kunststoff-Gleitlagern gehalten ist. Um den O-Ring auszubauen, muss das getriebeseitige Lager der Motoreinheit **03** herausgedrückt werden. Die Ausgangswelle **11** ist mit einer erodierten Bohrung formschlüssig auf der Antriebswelle **12** mit Epoxidharz aufgeklebt und kann nur mit Erwärmen über 120°C abgenommen werden. Dies ist allerdings nur bei Reparaturarbeiten notwendig. Alle Dichtungen und Gleitlager werden mit Silikonfett geschmiert. Desweiteren befindet sich im zweiten Deckel **06** eine druckdicht verschließbare Durchgangsbohrung **16** (vergleiche **Fig.** 1), die der Befüllung mit Druckflüssigkeit **07** und der Entlüftung der Motoreinheit **03** dient. Die Durchgangsbohrung **16** ist mit einer Verschlussschraube **17** (vergleiche **Fig.** 1) nach Beendigung von Befüllung und Entlüftung druckdicht verschlossen.

Für die Tiefseeeignung mit sehr großen hydrostatischen Drücken ist bei dem beanspruchten druckneutralen Elektromotor **01** sicherzustellen, dass keine komprimierbaren Druckkammern vorhanden sind. Dazu kann die Druckflüssigkeit **07** unter Vakuum entgast werden. Das erfolgt beispielsweise in einer abgeschlossenen Vakuumkammer. Da es hierbei schwierig ist, Anschlussleitungen aus dem Vakuum herauszuführen, kann der Elektromotor **01** außerhalb der Druckkammer unter Atmosphärendruck mit Druckflüssigkeit **07** befüllt und anschließend zum Entgasen in die Druckkammer gestellt und unter Vakuum gesetzt werden. Dieser alternierende Vorgang kann auch mehrfach wiederholt werden, bis alle Gasblasen zuverlässig aus dem Elektromotor **01** ausgetreten sind. Bei einer Druckkammer mit einer Zuleitungsmöglichkeit kann auch der gesamte Füllvorgang im Vakuum erfolgen, wobei dafür zu sorgen ist, dass die Druckflüssigkeit **07** sicher in das Innere des Elektromotors **01** gelangt. Das Befüllen erfolgt beispielsweise mit einer einfachen Spritze. Beim Befüllen ist der Druckbeutel **09** mit Luft auf seinen normalen Volumenzustand aufgebläht und druckdicht verschlossen. Sobald Drückflüssigkeit **07** aus der Durchgangsbohrung **16** austritt, wird der Füllvorgang abgebrochen. Zum Prüfen des Füllstandes der Druckflüssigkeit **07** im zylindrischen Gehäuse **02** eignet sich ein Ständer, in den Ø20 mm Löcher zum senkrechten Aufstellen des Elektromotors **01** gebohrt sind. Wird die Verschlussschraube **17** herausgeschraubt, strömt Luft in das zylindrische Gehäuse **02** und der Füllstand der Druckflüssigkeit **07** sackt ab. Der korrekte Füllstand kann durch eine Markierung am zylindrischen Gehäuse **02** angezeigt werden. Dabei ist für große Tauchtiefen darauf zu achten, dass die gesamte Motoreinheit **03** in der Druckflüssigkeit **07** liegt.

Zum Befüllen des Elektromotors **01** muss die Verschlussschraube **17** neben dem elektrischen Anschluss **14** herausgeschraubt werden. Mit einer einfachen Spritze mit Kanüle kann die Druckflüssigkeit **07** leicht eingefüllt werden. Dabei ist darauf zu achten, dass nicht versehentlich das offene Ende des Zuleitungsschlauches **10** gefüllt wird. Der Druckbeutel **09** hat mit seinem offenen Ende des Zuleitungsschlauchs **10** immer Kontakt mit der Umgebung, sodass der Druckbeutel **09** immer mit dem Umgebungsmedium gefüllt ist und unter dessen Druck steht, den er dann an die Druckflüssigkeit **07** überträgt. Wird der Elektromotor **01** neu befüllt oder war der Füllstand der Druckflüssigkeit **07** deutlich tiefer als die obere Kante des Impulsgebers (Encoder) der Motoreinheit **03,** empfiehlt es sich, den Motor in einem Exsikkator unter Vakuum zu entlüften. Dazu wird der Elektromotor **01** mit der gewünschten Menge der Druckflüssigkeit **07** gefüllt und offen in eine Vakuumkammer gestellt. Anschließend wird die Luft bis auf unter 10 mbar abgesaugt, wobei die Druckflüssigkeit **07** stark zu kochen beginnt. Der niedrige Druck wird für eine Minute gehalten, danach wird die Vakuumkammer wieder belüftet. Das Niveau der Druckflüssigkeit **07** sinkt deutlich, weil vorhandene Dampfblasen in der Motoreinheit **03** kollabieren. Um die erfolgreiche Entlüftung zu prüfen, kann erneut Unterdruck angelegt werden. Dabei soll der Druck aber nicht unter den Dampfdruck der Druckflüssigkeit **07** fallen. Anschließend wird die Luft bis auf 0,4 bar abgesaugt und der Flüssigkeitsstand beobachtet. Steigt der Flüssigkeitsstand, sind noch Luftblasen in der Motoreinheit **03,** weshalb weitere Entlüftungsmaßnahmen erforderlich sind. Bleibt der Flüssigkeitsstand konstant, war die Entlüftung erfolgreich. Es befinden sich keine Luftblasen mehr in der Motoreinheit **03.**

Nachdem der richtige Füllstand eingestellt ist und die Motoreinheit **03** erfolgreich entlüftet wurde, kann das zylindrische Gehäuse **02** geschlossen werden. Dazu wird eine mit 20 ml Luft gefüllte Spritze in das offene Ende des Anschlussschlauches **10** des Druckbeutels **09** eingesteckt. Dann wird der Elektromotor **01** schräg gehalten und die Luft in den Druckbeutel **09** eingefüllt, so dass der Flüssigkeitsstand steigt und alle Luft entweichen kann. Es ist zu überprüfen, ob die hineingedrückte Menge Luft in etwa zu dem gewählten Füllstand passt. Anschließend wird das zylindrische Gehäuse **02** bzw. der zweite Deckel **06** mit der Verschlussschraube **17** und einem O-Ring, der vorher auf Risse geprüft und mit Silikonfett eingeschmiert wurde, druckdicht verschlossen. Durch anschließendes Schütteln des druckneutralen Elektromotors **01** kann überprüft werden, ob sich auch mit Sicherheit keine störenden, weil dekomprimierbaren Luftblasen mehr in der Motoreinheit **03** befinden. Eine kleine Luftblase verbleibt meist im zylindrischen Gehäuse **02,** was aber unkritisch ist.

Für eine Funktionsprüfung des Elektromotors **01** werden ein Netzteil mit 12 V und mindestens 1 A sowie ein Oszilloskop zur Anzeige des Encodersignals benötigt. Der Elektromotor **01** läuft bei 12 V im Leerlauf mit ca. 15 U/Min, wobei er 0,58 A bis 0,60 A zieht. Ganz neue Motoren laufen sich zunächst ein, wobei das Fett im Getriebe von der lösungsmittelähnlichen Druckflüssigkeit **08** herausgewaschen wird. Belastet man die Ausgangswelle **11,** kann der Elektromotor **01** leicht 2 A bis 3 A ziehen. Die beiden Encoderkanäle geben ein zueinander phasenverschobenes Rechteck-Signal aus, wenn man sie mit 4 V bis 18 V bestromt.

Sowohl in **Fig.** 1 als auch in **Fig.** 2 ist zu erkennen, wie der Druckbeutel **09** locker, d.h. mit einigem Abstand um die Motoreinheit **03** herumgelegt ist, sodass die Druckflüssigkeit **07** auch gut zwischen den Druckbeutel **09** und die Motoreinheit **03** dringen und den Druckbeutel **09** völlig umgeben kann. Dadurch ist die optimale Druckübertragung zwischen dem hydrostatischen Druck in der Tiefsee im Einsatzfalle des Elektromotors **01** und der Druckflüssigkeit **07** sicher gewährleistet. Der verformbare Druckbeutel **09** passt sich sehr gut dem zylindrischen Gehäuse **02** und der Motoreinheit **03** an. Zusätzlich wird der Elektromotor **01** durch das kalte Seewasser im Druckbeutel **09** noch gekühlt. Er ist besonders platzsparend, sodass der druckneutrale Elektromotor **01** nach der Erfindung besonders kompakt und leicht ausgeführt werden kann. Darüber hinaus ist der relativ kostengünstig, da er mit vielen kommerziell erhältlichen Komponenten, insbesondere dem einfachen medizinischen Beutel **18** als Druckbeutel **09,** auskommt.

### Bezugszeichenliste

- **01**: druckneutraler Elektromotor
- **02**: Gehäuse
- **03**: Motoreinheit
- **04**: Druckausgleichselement
- **05**: erster Deckel
- **06**: zweiter Deckel
- **07**: Druckflüssigkeit
- **08**: Hydrofluorether
- **09**: Druckbeutel
- **10**: Zuleitungsschlauch von 09
- **11**: Ausgangswelle
- **12**: Antriebswelle
- **13**: Dichtungsrohr
- **14**: elektrischer Anschluss
- **15**: Stecker
- **16**: Durchgangsbohrung
- **17**: Verschlussschraube
- **18**: (medizinischer) Schlauchbeutel als 09

**URL 1**
   https://depositonce.tu-berlin.de/handle/11303/2754
**URL 2**
   http://www.enitech.de/files/produkte/Datenblatt_Ringthruster.pdf
**URL 3**
   https://www.maxonmotor.de/maxon/view/content/aquatic-solutions
**URL 4**
   http://www.fmt-kempen.de/de/pro/momentall.htm
**URL 5**
   https://fmcc.faulhaber.com/resources/img/DE_2342_CR_DFF.PDF
**URL 6**
   http://multimedia.3m.com/mws/media/65496O/3mtm-novectm-7500-engineered-fluid.pdf?fn=prodinfo_nvc7500.pdf

## Patentansprüche

1. Druckneutraler Elektromotor (01) zum Unterwassereinsatz in der Tiefsee mit einem Gehäuse (02), in dem eine mit einer dielektrischen Druckflüssigkeit (07) gefüllte zylindrische Motoreinheit (03), wobei das Befüllen der Motoreinheit (03) unter Atmosphärendruck alternierend mit einer Entlüftung im Vakuum erfolgt, um eine luftblasenfreie Füllung am Ende des Befüllens der Motoreinheit (03) zu garantieren, und ein reversibel verformbares Druckausgleichselement (04) zum Druckausgleich zwischen der Druckflüssigkeit (07) und dem im Unterwassereinsatz auf die Motoreinheit (03) einwirkenden hydrostatischen Druck angeordnet sind, **dadurch gekennzeichnet, dass** das reversibel verformbare Druckausgleichselement (04) als druckdichter Druckbeutel (09) mit einem am vom Druckbeutel (09) abgewandten Ende offenen, aus dem Gehäuse (02) druckdicht herausgeführten Zuleitungsschlauch (10) ausgebildet und mit einigem Abstand, sodass die Druckflüssigkeit (07) auch gut zwischen den Druckbeutel (09) und die Motoreinheit (03) dringen kann und der Druckbeutel (09) auf seiner Außenseite vollständig von Druckflüssigkeit (07) umgeben ist, um die Motoreinheit (03) innerhalb des Gehäuses (02) herumgelegt ist wobei der Druckbeutel (09) beim Befüllen der Motoreinheit (03) mit Luft gefüllt und auf seinen normalen Volumenzustand aufgebläht ist, dass das Gehäuse (02) durchsichtig ausgebildet und dass als Druckflüssigkeit (07) ein kommerziell erhältlicher Hydrofluorether (08) eingesetzt ist.

2. Druckneutraler Elektromotor (01) nach Anspruch 1, **dadurch gekennzeichnet, dass** das Gehäuse (02) zylindrisch ausgebildet ist.

3. Druckneutraler Elektromotor (01) nach Anspruch 1 oder 2, **dadurch gekennzeichnet, dass** das Gehäuse (02) an seinem einen Ende mit einem ersten Deckel (05) und an seinem anderen Ende mit einem zweiten Deckel (06) druckdicht verschlossen ist.

4. Druckneutraler Elektromotor (01) nach Anspruch 3, **dadurch gekennzeichnet, dass** durch den ersten Deckel (05) eine mit der Motoreinheit (03) in Verbindung stehende Ausgangswelle (11 und durch den zweiten Deckel (06) der Zuleitungsschlauch (10) des Druckbeutels (09) und ein elektrischer Anschluss (14) für die Motoreinheit (03) druckdicht herausgeführt sind.

5. Druckneutraler Elektromotor (01) nach Anspruch 3 oder 4, **dadurch gekennzeichnet, dass** im zweiten Deckel (06) eine druckdicht verschließbare Durchgangsbohrung (16) vorgesehen ist, die der Befüllung mit Druckflüssigkeit (07) und der Entlüftung der Motoreinheit (03) dient.

6. Druckneutraler Elektromotor (01) nach einem der vorangehenden Ansprüche, **dadurch gekennzeichnet, dass** das Gehäuse (02) aus transparentem Polymethylmethacrylat oder Polycarbonat ausgebildet ist.

7. Druckneutraler Elektromotor (01) nach einem der vorangehenden Ansprüche, **dadurch gekennzeichnet, dass** als Druckbeutel (09) ein kommerziell erhältlicher Schlauchbeutel (18) mit einem integrierten offenen Zuleitungsschlauch (10) eingesetzt ist, wobei in das Ende des offenen Zuleitungsschlauchs (10) ein Dichtungsrohr (13) eingesetzt ist.

8. Druckneutraler Elektromotor (01) nach einem der vorangehenden Ansprüche, **dadurch gekennzeichnet, dass** die Motoreinheit (03) ein Getriebe und einen Impulsgeber umfasst.

## Claims

1. Pressure independent electric motor (01) for underwater use in the deep sea having a housing (02), in which a cylindrical motor unit (03) filled with a dielectric pressure fluid (07), wherein the motor unit (03) is filled under atmospheric pressure alternately with a venting in a vacuum in order to guarantee filling free of air bubbles at the end of the filling of the motor unit (03), and a reversibly deformable pressure compensation element (04) for pressure compensation are arranged between the pressure fluid (07) and the hydrostatic pressure acting on the motor unit (03) in underwater use, **characterized in that** the reversibly deformable pressure compensation element (04) is designed as a pressure-tight pressure bag (09) having a supply tube (10) which is open at the end facing away from the pressure bag (09) and guided out of the housing (02) in a pressure-tight manner, and having some spacing such that the pressure fluid (07) can also penetrate easily between the pressure bag (09) and the motor unit (03) and the pressure bag (09) is completely surrounded by pressure fluid (07) on its outside, is placed around the motor unit (03) within the housing (02), wherein the pressure bag (09) when filling the motor unit (03) is filled with air and inflated to its normal volume state, **in that** the housing (02) is designed to be transparent and **in that** a commercially available hydrofluoroether (08) is used as pressure fluid (07) .

2. Pressure independent electric motor (01) according to Claim 1, **characterized in that** the housing (02) is designed to be cylindrical.

3. Pressure independent electric motor (01) according to Claim 1 or 2, **characterized in that** the housing (02) is sealed in a pressure-tight manner with a first cover (05) at one end and with a second cover (06) at another end.

4. Pressure independent electric motor (01) according to Claim 3, **characterized in that** an output shaft (11) connected to the motor unit (03) is guided out through the first cover (05) in a pressure-tight manner, and the supply tube (10) of the pressure bag (09) and an electrical connection (14) for the motor unit (03) are guided out through the second cover (06) in a pressure-tight manner.

5. Pressure independent electric motor (01) according to Claim 3 or 4, **characterized in that** a through-hole (16) which can be sealed in a pressure-tight manner is provided in the second cover (06), which through-hole (16) is intended for filling with pressure fluid (07) and venting the motor unit (03).

6. Pressure independent electric motor (01) according to one of the preceding claims, **characterized in that** the housing (02) is made of transparent polymethyl methacrylate or polycarbonate.

7. Pressure independent electric motor (01) according to one of the preceding claims, **characterized in that** a commercially available tubular bag (18) having an integrated open supply tube (10) is used as the pressure bag (09), wherein a sealing tube (13) is inserted into the end of the open supply tube (10).

8. Pressure independent electric motor (01) according to one of the preceding claims, **characterized in that** the motor unit (03) comprises a transmission and a pulse generator.

## Revendications

1. Moteur électrique indépendant de la pression (01) destiné à une utilisation dans les abysses, comportant un carter (02) dans lequel sont disposés une unité motrice (03) remplie d'un liquide diélectrique sous pression (07), le remplissage de l'unité motrice (03) ayant lieu sous pression atmosphérique en alternance avec une purge dans le vide afin de garantir un remplissage sans bulles à la fin du remplissage de l'unité motrice (03), et un élément de compensation de pression déformable de manière réversible (04) pour la compensation de pression entre le liquide sous pression (07) et la pression hydrostatique agissant en utilisation dans les abysses sur l'unité motrice (03), **caractérisé en ce que** l'élément de compensation de pression déformable de manière réversible (04) est réalisé sous forme d'une poche pressurisée étanche à la pression (09) comportant un tuyau d'alimentation (10) ouvert à l'extrémité détournée de la poche pressurisée (09) et sortant du carter (02) de manière étanche à la pression et à une certaine distance, de sorte que le liquide sous pression (07) peut aussi bien pénétrer entre la poche pressurisée (09) et l'unité motrice (03) et que la poche pressurisée (09) est entièrement entourée de liquide sous pression (07) sur sa face extérieure pour que l'unité motrice (03) se trouve sur le pourtour à l'intérieur du carter (02), la poche pressurisée (09) étant remplie avec de l'air lors du remplissage de l'unité motrice (03) et gonflée jusqu'à son état volumétrique normal, que le carter (02) est de conformation transparente et qu'on utilise comme liquide sous pression (07) un hydrofluoroéther (08) vendu dans le commerce.

2. Moteur électrique indépendant de la pression (01) selon la revendication 1, **caractérisé en ce que** le carter (02) a une conformation cylindrique.

3. Moteur électrique indépendant de la pression (01) selon la revendication 1 ou 2, **caractérisé en ce que** le carter (02) est fermé de manière étanche à la pression à une de ses extrémités par un premier couvercle (05) et à son autre extrémité par un second couvercle (06).

4. Moteur électrique indépendant de la pression (01) selon la revendication 3, **caractérisé en ce que** sortent par le premier couvercle (05) un arbre de sortie (11) en liaison avec l'unité motrice (03) et par le second couvercle (06) le tuyau d'alimentation (10) de la poche pressurisée (09) et un raccordement électrique (14) pour l'unité motrice (03).

5. Moteur électrique indépendant de la pression (01) selon la revendication 3 ou 4, **caractérisé en ce qu'**il est prévu dans le second couvercle (06) un trou traversant (16) pouvant être fermé de manière étanche à la pression et qui sert au remplissage avec du liquide sous pression (07) et à la purge de l'unité motrice (03).

6. Moteur électrique indépendant de la pression (01) selon une des revendications précédentes, **caractérisé en ce que** le carter (02) est composé de polyméthyle méthacrylate ou de polycarbonate.

7. Moteur électrique indépendant de la pression (01) selon une des revendications précédentes, **caractérisé en ce qu'**on utilise comme poche pressurisée (09) une poche pressurisée vendue dans le commerce (18) comportant un tuyau d'alimentation ouvert intégré (10), un tube d'étanchéité (13) étant inséré dans l'extrémité du tuyau d'alimentation ouvert intégré (10).

8. Moteur électrique indépendant de la pression (01) selon une des revendications précédentes, **caractérisé en ce que** l'unité motrice (03) comprend une transmission et un générateur d'impulsions.
